# EUROPÄISCHE PATENTANMELDUNG

(11) **EP 0 801 276 A2**
(43) Veröffentlichungstag der Anmeldung: **15.10.1997**
(21) Anmeldenummer: 97101744.7
(22) Anmeldetag: 05.02.1997
(51) Int. Cl.: F24J 2/00

(54) **Gebäude mit Solarenergie nutzenden Brüstungs- und Wandbereichen**

(30) Priorität: 12.04.1996 DE 19614516
(71) Anmelder: Norsk Hydro ASA, 0257 Oslo 2 (NO)
(72) Erfinder: Schulz, Harald, Dr., 86381 Krumbach (DE)
(74) Vertreter: Dziewior, Joachim, Dipl.-Phys. Dr.

(57) **Zusammenfassung**

Das Gebäude besitzt Brüstungs- und Wandbereiche (1), die zur Nutzung von Solarenergie zwischen einer gebäudeinnenseitigen Wandschale (6) und einer für die Solarstrahlung durchlässigen, gebäudeaußenseitigen Wandschale (7) eine die Solarstrahlung aufnehmende Absorptionsschicht (9) aufweisen, wobei die in der Absorptionsschicht (9) aus der Solarstrahlung gewonnene Wärmeenergie einen durch die gebäudeinnenseitige Wandschale (6) und die Wandinnenoberfläche (3) fließenden Wärmestrom ergibt. Mindestens ein für die Raumheizung vorgesehener, ein Wärmespeichermittel, insbesondere Heizungswasser enthaltender Heizungskörper (2) ist auf der Gebäudeinnenseite der Brüstungs- und Wandbereiche (1) in thermischen Kontakt mit der Wandinnenoberfläche (3) angeordnet.

## Beschreibung

Die Erfindung betrifft ein Gebäude mit Brüstungs- und Wandbereichen, die zur Nutzung von Solarenergie zwischen einer gebäudeinnenseitigen Wandschale und einer für die Solarstrahlung durchlässigen, gebäudeaußenseitigen Wandschale eine Solarstrahlung aufnehmende Absorptionsschicht aufweisen, wobei die in der Absorptionsschicht aus der Solarstrahlung gewonnene Wärmeenergie einen durch die gebäudeinnenseitige Wandschale und die Wandinnenoberfläche fließenden Wärmestrom ergibt.

Gebäude mit einer derartig aufgebauten Außenwand sind aus WO 95/10 741 bekannt. Für die am Standort des Gebäudes zu erwartende größtmögliche Sonneneinstrahlung sind der Gesamtenergiedurchlaßgrad, die Wärmedurchgangswiderstände der beiden Wandschalen sowie der Absorptionsgrad an der Absorptionsschicht so aufeinander abgestimmt, daß sowohl ein maximaler Temperaturwert an der Absorptionsschicht als auch ein maximaler Temperaturwert an der Wandinnenoberfläche nicht überschritten wird. Durch die Temperaturbegrenzung an der Absorptionsschicht wird erreicht, daß Überhitzungen im Wandaufbau vermieden werden, während die Temperaturbegrenzung an der Wandinnenoberfläche dafür sorgt, daß die Temperatur an der Wandinnenoberfläche wie auch der an der Wandinnenoberfläche zur Luft im Gebäudeinnenraum hin auftretende Temperatursprung selbst bei maximaler Sonneneinstrahlung in Bereichen liegt, die von im Innenraum sich aufhaltenden Personen noch als behaglich empfunden werden. Dabei wird bewußt eine Verringerung der Solarenergienutzung während einer verminderten Sonneneinstrahlungsperiode in Kauf genommen.

Der Erfindung liegt die Aufgabe zugrunde, bei einem Gebäude mit Brüstungs- und Wandbereichen der eingangs genannten Art die Anordnung so weiter auszubilden, daß die bewußt in Kauf genommene Verringerung der Solarenergienutzung möglichst klein ist.

Diese Aufgabe wird bei einem Gebäude mit den eingangs genannten Merkmalen erfindungsgemäß dadurch gelöst, daß mindestens ein für die Raumheizung vorgesehener, Heizungswasser als Wärmespeichermittel enthaltender Heizungskörper, insbesondere ein Radiator oder ein Konvektor, auf der Gebäudeinnenseite der Brüstungs- und Wandbereiche in thermischen Kontakt mit der Wandinnenoberfläche angeordnet ist.

Dadurch wird erreicht, daß der zur Gebäudeinnenseite gerichtete Wärmestrom von dem Heizungskörper aufgenommen wird, der eine hohe absolute Wärmekapazität aufweist, daß also ein gegebener Wärmeeintrag nur zu einer relativ kleinen Erhöhung der Temperatur des Heizungskörpers über die Raumtemperatur hinaus führt. Es kann also mehr Wärme zur Wandinnenoberfläche transportiert werden, bevor die als unangenehm empfundene Temperatur erreicht wird. Die Bereitstellung des Heizkörpers mit der hohen Wärmekapazität bedeutet andererseits, daß der Heizungskörper viel Wärme abgeben kann, bis er wieder auf Raumtemperatur abgekühlt ist.

Es ist nach einer alternativen Ausführungsform vorgesehen, daß der eine innere Abschlußwand bildende Heizungskörper in die gebäudeinnenseitige Wandschale integriert ist. Damit führt der Heizungkörper nicht zu einer Verringerung des nutzbaren Raumquerschnitts und bietet insoweit die gleichen Vorteile wie eine Fußbodenheizung. Außerdem ist die ästhetische Wirkung vorteilhafter.

Besonders bevorzugt ist eine Ausführungsform, die dadurch gekennzeichnet ist, daß das Heizungswasser zwischen Heizkörpern, die nach unterschiedlichen Himmelsrichtungen orientierten Brüstungs- und Wandelementen zugeordnet sind, durch eine Umwälzpumpe umwälzbar ist. Zum einen wird dadurch ein Ausgleich zwischen Heizkörpern ermöglicht, die einem unterschiedlichen Solarenergieangebot ausgesetzt sind. Dies bewirkt zusätzlich eine relative Erhöhung der zur Verfügung stehenden Wärmekapazität von Heizungskörpern in südlich ausgerichteten Räumen. Weiterhin kann durch das Umwälzen des Heizungswassers der Heizungskörper als Wärmetauscher und als Wasserkühler aufgefaßt werden, der einen höheren Wärmestrom durch die Außenwand erlaubt, bevor die Temperatur an der Wandinnenoberfläche den krititschen Wert erreicht. Zum anderen ist es durch das Umwälzen möglich, daß zur nochmaligen Erhöhung der Wärmekapazität ein Heizwasserspeicher getrennt von den Heizkörpern bereit gehalten wird, der in Verbindung mit einem Wärmetauscher auch zur Bereitstellung von Brauchwasser geeignet ist.

Eine weitere Ausführungsform ist dadurch gekennzeichnet, daß durch eine Verkleidung ein von der Luft des Gebäudeinnenraums durchströmbarer Konvektionsraum gebildet ist, und daß verstellbare Strömungseinrichtungen vorgesehen sind, mit welchen der Luftstrom durch den Konvektionsraum einstellbar ist.

Bei dieser Anordnung dienen der Heizungskörper und die Verkleidung dazu, einen Teil der Wandinnenoberfläche abzuschirmen und dadurch die Wärmeabstrahlung dieses Teils der Wandinnenoberfläche in den Gebäudeinnenraum hinein zu reduzieren, so daß für die maximale Temperatur an der Wandinnenoberfläche ein entsprechender höherer Wert zulässig wird, ohne daß das Gefühl der Behaglichkeit sich im Gebäudeinnenraum aufhaltender Personen beeinträchtigt wird. Diese zulässige höhere Maximaltemperatur an der Wandinnenoberfläche bedeutet erneut eine bessere Nutzung des Solarenergieangebots. Dabei ermöglicht es die Einstellung des Luftstroms durch den Konvektionsraum, den Wärmeübergang vom Heizungskörper in Richtung zum Gebäudeinnenraum hin nach Wunsch zu beeinflussen, indem eine Drosselung des Luftstroms den Wärmeübergang verringert. Im Sommer bei entsprechend hohen Außentemperaturen und/oder hohem Solarenergieangebot wird der Luftstrom gedrosselt oder ganz gesperrt, so daß zu hohe Temperaturen im Gebäudeinnenraum vermieden werden, während im Winter bei niedrigen Außentemperaturen und/oder niedrigem Solarenergieangebot ein stärkerer Luftstrom die durch die gebäudeinnenseitige Wandschale fließende Wärme an der inneren Oberfläche entsprechend vollständiger aufnehmen und in den Gebäudeinnenraum übertragen kann.

Die Verstellung der Strömungseinrichtungen, mit welchen der Luftstrom durch den Konvektionsraum einstellbar ist, erfolgt allgemein in Abhängigkeit von den jeweils herrschenden thermischen Verhältnissen außerhalb und innerhalb des Gebäudes und vom Solarenergieangebot. Diese Verstellung kann im einfachsten und gröbsten Fall von Hand derart erfolgen, daß im Sommer der Luftstrom durch den Konvektionsraum gedrosselt oder ganz gesperrt ist, im Winter dagegen fließen kann. Eine dem gegenüber wesentlich bessere und daher bevorzugte Ausführungsform der Erfindung ist allerdings dadurch gekennzeichnet, daß die Strömungseinrichtungen zu ihrer Verstellung Stellglieder besitzen und die Stellglieder abhängig von ausgewählten Klimawerten außerhalb und/oder innerhalb des Gebäudes steuerbar sind. Als Klimawerte für die Steuerung können insbesondere die Außentemperatur und das Solarenergieangebot einerseits und die Innentemperatur im Gebäudeinnenraum andererseits dienen, wozu diese Klimawerte erfassende Fühler vorgesehen sein können. Im übrigen ist es gleichfalls möglich, daß entsprechend den von den Fühlern erfaßten Werten die Umwälzung des Heizungswassers gesteuert wird.

Eine weiter bevorzugte Ausführungsform der Erfindung ist dadurch gekennzeichnet, daß die Verkleidung eine den Konvektionsraum oben übergreifende, an die Wandinnenoberfläche der Außenwand anschließende Deckwand mit Austrittsöffnungen für die den Konvektionsraum durchströmende Luft aufweist und daß die verstellbaren Strömungseinrichtungen von Verschlußgliedern, wie Schiebern, Klappen oder dergleichen, für die Austrittsöffnungen gebildet sind. Vorzugsweise besitzt die Verkleidung weiter eine zur Wandinnenoberfläche im wesentlichen parallele Frontwand, die oben an die Deckwand anschließt und unterhalb der Deckwand den Konvektionsraum gegen den Gebäudeinnenraum hin abschließt. Dabei kann die Frontwand den Heizungskörper zum Gebäudeinnenraum hin vollständig abdecken, der Heizungskörper sich somit insgesamt innerhalb des Konvektionsraums befinden. Es besteht aber auch die Möglichkeit, daß die Frontwand eine den Heizungskörper aufnehmende Aussparung aufweist, in der der Heizungskörper mit seiner dem Gebäudeinnenraum zugekehrten Wandung im wesentlichen bündig mit der Außenfläche der Frontwand abschließt und mit seinem oberen Rand sowie seinen beiden seitlichen Rändern dicht an die zugeordneten Ränder der Aussparung anschließt. Die Verkleidung kann dann während der Heizperiode die Wärmeabstrahlung des Heizungskörpers in den Gebäudeinnenraum hinein nicht behindern, so daß deren Heizung durch eine Kombination von Wärmeleitung, Konvektion und Wärmestrahlung erfolgt, was gegenüber einer auf einen einzigen Wärmetransportmechanismus gestützen Heizung physiologisch vorteilhaft ist und als besonders angenehm entfunden wird.

Die Luftzufuhr in den Konvektionsraum kann auf verschiedene Weise erfolgen. Im einfachsten Fall kann für den Eintritt der Luft in den Konvektionsraum die Frontwand im Fußbodenbereich des Gebäudeinnenraums Eintrittsöffnungen aufweisen. Dabei kann sich der Luftstrom allein aus Gravitationskräften ergeben; es kann aber auch ein ihn antreibendes Gebläse vorgesehen sein.

Sind mehrere Heizungskörper vor der Wandinnenoberfläche nebeneinander angeordnet, erstreckt sich vorzugsweise die Deckwand und/oder die Frontwand der Verkleidung durchlaufend über alle Heizungskörper, so daß beispielsweise der gesamte Brüstungsbereich der Außenwand gebäudeinnenseitig durch die Verkleidung bzw. Heizungskörper überdeckt sein kann.

Die Verkleidung kann auf der dem Konvektionsraum zugewandten Innenoberfläche eine Wärmedämmschicht aufweisen, damit eine hohe Lufttemperatur im Konvektionsraum, bei beispielsweise geringem oder fehlendem Luftstrom, an der dem Gebäudeinnenraum zugewandten Oberfläche der Verkleidung keine unerwünschten hohen Temperaturen erzeugen kann.

Bei Ausführungsformen an Gebäuden, bei denen zwischen den Wandschalen Pfosten bzw Riegel angeordnet sind, ist vorgesehen, daß diese thermisch von den Heizkörpern getrennt sind, wozu jeweils eine Isolierzwischenlage vorgesehen ist.

Die durch die Heizkörper am Pfosten bzw Riegel gebildete Stoßfuge ist durch eine Leiste abgedeckt, die über Dichtungen den Heizkörpern anliegt und mit den Pfosten bzw Riegeln verschraubt ist.

Im folgenden wird die Erfindung an in der Zeichnung dargestellten Ausführungsbeispielen näher erläutert; es zeigen:
- Fig. 1: einen gemäß der Erfindung ausgebildeten Gebäudeteil, teils im Querschnitt, teils in einer Schrägansicht vom Gebäudeinnenraum her gesehen,
- Fig. 2: eine Draufsicht auf die Deckwand der Verkleidung in Fig. 1 in Richtung des dort eingetragenen Pfeils II,
- Fig. 3: einen Teil des Querschnitts aus Fig. 1 in vergrößerter Darstellung,
- Fig. 4: den Gegenstand der Fig. 3 in einer anderen Ausführungsform,

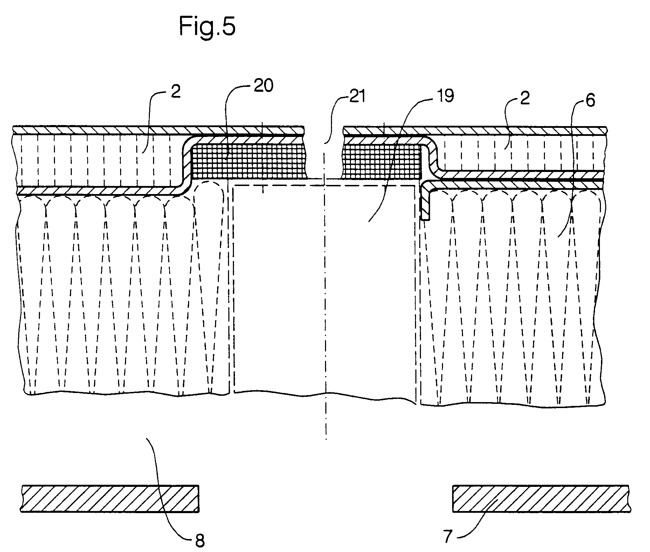

- Fig. 5: einen Längsschnitt durch zwei Wandschalen mit einem zwischen diesen angeordneten Pfosten bzw. Riegel, und

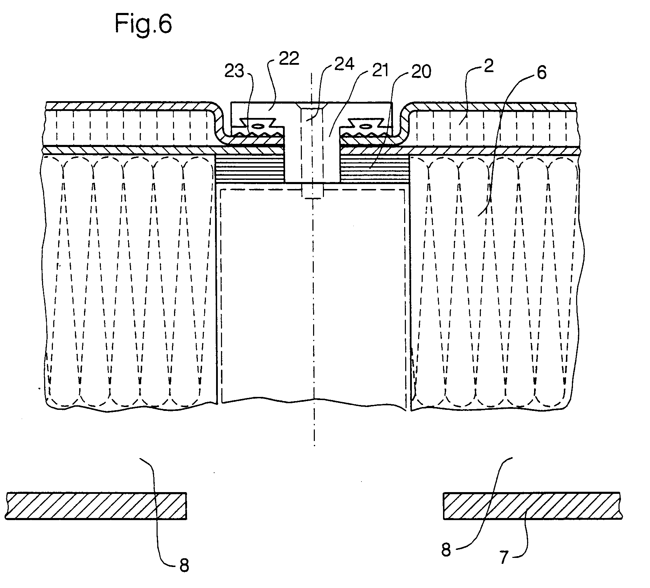

Fig. 6 eine Fig. 5 entsprechende Darstellung einer alternativen Ausführung mit durch eine Leiste abgedeckter Stoßfuge.

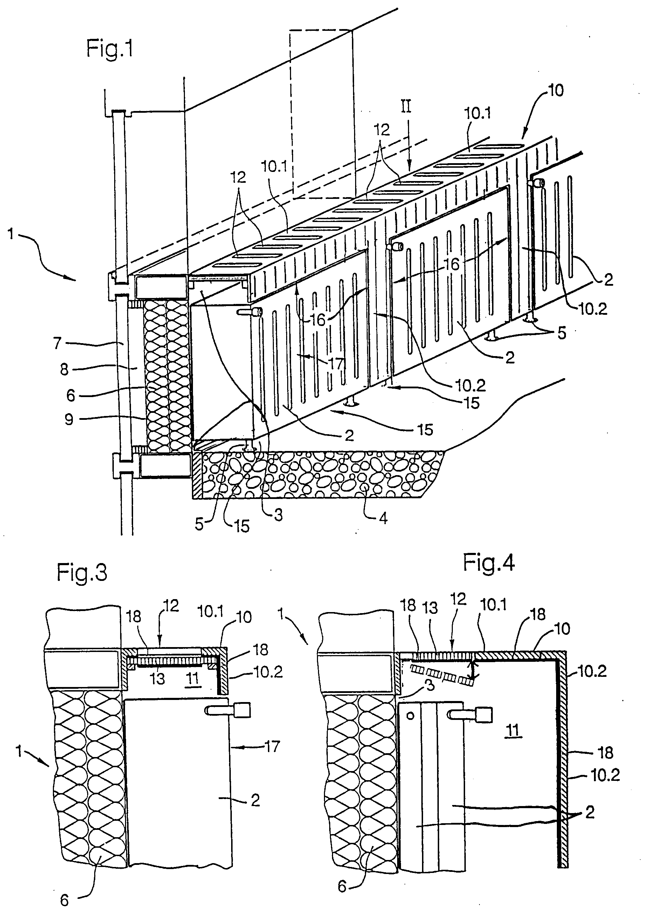

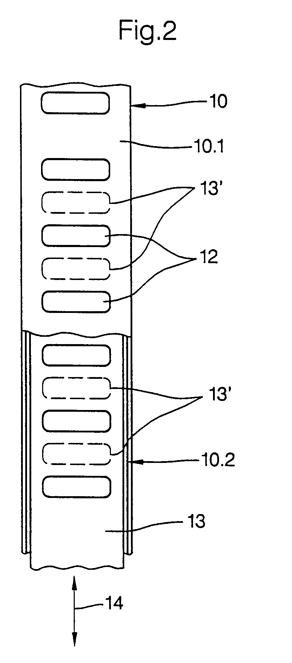

Die Fig. 1 zeigt einen Teil eines Gebäudes mit Brüstungs- und Wandbereichen 1 und auf der Gebäudeinnenseite dieser Bereiche für die Raumheizung vorgesehene, mit Heizungswasser gefüllte Heizungskörper 2. Eine Geschoßdecke des Gebäudes ist mit 4 bezeichnet. Die Brüstungs- und Wandbereiche 1 besitzen einen zur Nutzung von Solarenergie bestimmten Aufbau, der bezüglich seiner Einzelheiten nur im mittleren Wandelement des gezeigten Teils der Brüstungs- und Wandbereiche 1 dargestellt ist. Zwischen einer als Wärmedämmschicht ausgebildeten gebäudeinnenseitigen Wandschale 6 und einer für Solarstrahlung durchlässigen, gebäudeaußenseitigen Wandschale 7, die als Wärmedämmschicht einen Luftraum 8 enthält, ist eine die Solarstrahlung aus dem Luftraum 8 aufnehmende Absorptionsschicht 9 angeordnet. Die in der Absorptionsschicht 9 aus der Solarstrahlung gewonnene Wärmeenergie ergibt einen einerseits nach außen gerichteten Wärmestrom, andererseits einen durch die gebäudeinnenseitige Wandschale 6 und die Wandinnenoberfläche 3 in den Gebäudeinnenraum (jeweils auf der in Zeichnung rechten Seite der Außenwand 1) fließenden Wärmestrom.

Die Heizungskörper 2 stehen in thermischen Kontakt mit der Wandinnenoberfläche 3. Die Heizungskörper 2 liegen in den in der Zeichnung dargestellten Ausführungsformen direkt der Wandinnenoberfläche 3 an und sind mit Füßen 5 auf der Geschoßdecke 4 abgestützt. Alternativ können die Heizungskörper 2 aber auch die Abschlußwand der gebäudeseitigen Wandschale 6 bilden.

Die Heizungskörper 2 sind an einen im einzelnen nicht dargestellten Heizungswasserumlauf angeschlossen, in dem mittels einer Umwälzpumpe das Heizungswasser umgewälzt wird von Brüstungs- und Wandbereichen mit einem hohen Solarenergieeintrag zu Brüstungs- und Wandbereichen, die einem geringen Solarenergieangebot ausgesetzt sind. Die Heizungskörper 2 sind als Radiator oder Konvektor ausgebildet. Das Heizungswasser bildet ein Wärmespeichermittel, das Wärme direkt von der gebäudeseitigen Wandschale 6 mit der Wärmedämmschicht aufnehmen kann. Wird diese Wärme nicht für die Raumheizung benötigt, kann diese über einen Wärmetauscher einem Brauchwasserreservoir zugeführt werden.

Auf der Gebäudeinnenseite ist eine Verkleidung 10 vorgesehen, durch die ein von der Luft des Gebäudeinnenraums durchströmbarer Konvektionsraum 11 gebildet ist. Der den Konvektionsraum 10 durchfließende Luftstrom ist hinsichtlich seiner Stärke durch verstellbare Strömungseinrichtungen einstellbar. Im einzelnen besitzt die Verkleidung 10 eine den Konvektionsraum 11 oben übergreifende, an die Wandinnenoberfläche 3 der Außenwand 1 anschließende Deckwand 10.1 mit Austrittsöffnungen 12 für die den Konvektionsraum 11 durchströmende Luft. Die den Luftstrom einstellenden Strömungseinrichtungen sind von geeigneten Verschlußgliedern 13 für diese Austrittsöffnungen 12 gebildet. Solche Verschlußglieder 13 können verstellbare Schieber, wie in den Fig. 1, 2 und 3 oder Klappen (Fig. 4) sein, wobei die Verschlußglieder 13 in der Zeichnung in ihrer die Austrittsöffnungen 12 schließenden Stellung ausgezogen, in ihrer die Austrittsöffnungen 12 völlig freigebenden Stellung 13' gestrichelt (Fig. 2) dargestellt sind. Die Verstellung der Verschlußglieder 13 erfolgt jeweils in Richtung der Doppelpfeile 14. Weiter besitzt die Verkleidung 10 eine zur Wandinnenoberfläche 3 im wesentlichen parallele Frontwand 10.2, die oben an die Deckwand 10.1 anschließt und unterhalb der Deckwand 10.1 den Konvektionsraum 11 gegen den Gebäudeinnenraum hin bis auf im Fußbodenbereich des Gebäudeinnenraums vorgesehene Öffnungen 15 für den Eintritt der Luft in den Konvektionsraum 11 abschließt. Die Deckwand 10.1 und die Frontwand 10.2 erstrecken sich durchlaufend über alle Heizungskörper 2. Dabei kann, wie in den Fig. 1 bis 3 dargestellt, die Frontwand 10.2 für jeden Heizungskörper 2 eine ihn aufnehmende Aussparung 16 besitzen, in der der Heizungskörper 2 mit seiner dem Gebäudeinnenraum zugekehrten Wandung 17 bündig mit der Außenfläche der Frontwand 10.2 abschließt und mit seinem oberen Rand sowie seinen beiden seitlichen Rändern dicht an die zugeordneten Ränder der Aussparung 16 anschließt. Es besteht aber auch die in Fig. 4 gezeigte Möglichkeit, daß die Frontwand 10.2 die Heizungskörper 2 zum Gebäudeinnenraum hin vollständig abdeckt, die Heizungskörper 2 sich somit insgesamt innerhalb des Konvektionsraums 11 befinden. Die die Strömungseinrichtungen bildenden Verschlußglieder 13 besitzen zu ihrer Verstellung im einzelnen nicht dargestellte Stellglieder, die abhängig von ausgewählten Klimawerten außerhalb und/oder innerhalb des Gebäudes steuerbar sind. Derartige Klimawerte können die Außentemperatur und das Solarenergieangebot einerseits und die Innentemperatur im Gebäudeinnenraum andererseits sein. Zur Erfassung dieser Klimawerte können Fühler vorgesehen sein, die in der Zeichnung ebenfalls nicht dargestellt sind. Die Umwälzpumpe kann gleichfalls in Abhängigkeit der von den Fühlern erfaßten Werten gesteuert sein.

Die Verkleidung 10 kann auf der dem Konvektionsraum 11 zugewandten Innenoberfläche eine Wärmedämmschicht 18 tragen, die in den Fig. 3 und 4 lediglich durch eine dickere Strichsstärke angedeutet ist.

Bei Gebäuden, bei denen zwischen den Wandschalen 6,7 Pfosten bzw. Riegel 19 angeordnet sind, erfolgt eine thermische Trennung von den Heizkörpern 2 und den Pfosten bzw. Riegel 19 jeweils durch eine Isolierzwischenlage 20. Die durch die Heizkörper 2 gebildete Stoßfuge 21 ist mittels einer Leiste 22 abgedeckt, die über Dichtungen 23 den Heizkörpern 2 anliegt und mit den Pfosten bzw Riegeln 19 verschraubt ist.

## Patentansprüche

1. Gebäude mit Brüstungs- und Wandbereichen (1), die zur Nutzung von Solarenergie zwischen einer gebäudeinnenseitigen Wandschale (6) und einer für die Solarstrahlung durchlässigen, gebäudeaußenseitigen Wandschale (7) eine Solarstrahlung aufnehmende Absorptionsschicht (9) aufweisen, wobei die in der Absorptionsschicht (9) aus der Solarstrahlung gewonnene Wärmeenergie einen durch die gebäudeinnenseitige Wandschale (6) und die Wandinnenoberfläche (3) fließenden Wärmestrom ergibt, dadurch gekennzeichnet, daß mindestens ein für die Raumheizung vorgesehener, Heizungswasser als Wärmespeichermittel enthaltender, an einen Heizungswasserumlauf angeschlossener Heizungskörper (2), insbesondere ein Radiator oder ein Konvektor, auf der Gebäudeinnenseite der Brüstungs- und Wandbereiche (1) in thermischen Kontakt mit der Wandinnenoberfläche (3) angeordnet ist.

2. Gebäude nach Anspruch 1, dadurch gekennzeichnet, daß der eine innere Abschlußwand bildende Heizungskörper (2) in die gebäudeinnenseitige Wandschale integriert (6) ist.

3. Gebäude nach Anspruch 1 oder 2, dadurch gekennzeichnet, daß das Heizungswasser zwischen Heizkörpern (2), die nach unterschiedlichen Himmelsrichtungen orientierten Brüstungs- und Wandelementen zugeordnet sind, durch eine Umwälzpumpe umwälzbar ist.

4. Gebäude nach Anspruch 3, dadurch gekennzeichnet, daß in dem Kreislauf des umwälzbaren Heizungswassers ein Wärmetauscher angeordnet ist, durch den die Wärme einem Brauchwasserreservoir zuführbar ist.

5. Gebäude nach einem der Ansprüche 1 bis 4, dadurch gekennzeichnet, daß durch eine Verkleidung (10) ein von der Luft des Gebäudeinnenraums durchströmbarer Konvektionsraum (11) gebildet ist, und daß verstellbare Strömungseinrichtungen vorgesehen sind, mit welchen der Luftstrom durch den Konvektionsraum (11) einstellbar ist.

6. Gebäude nach Anspruch 5, dadurch gekennzeichnet, daß die Strömungseinrichtungen zu ihrer Verstellung Stellglieder besitzen und die Stellglieder abhängig von ausgewählten Klimawerten außerhalb und/oder innerhalb des Gebäudes steuerbar sind.

7. Gebäude nach Anspruch 6, dadurch gekennzeichnet, daß als Klimawerte für die Steuerung der Stellglieder die Außentemperatur und das Solarenergieangebot einerseits und die Innentemperatur im Gebäudeinnenraum andererseits dienen und diese Klimawerte erfassende Fühler vorgesehen sind.

8. Gebäude nach einem der Ansprüche 5 bis 7, dadurch gekennzeichnet, daß die Verkleidung (10) eine den Konvektionsraum (11) oben übergreifende, an die Wandinnenoberfläche (3) der Außenwand (1) anschließende Deckwand (10.1) mit Austrittsöffnungen (12) für die den Konvektionsraum (11) durchströmende Luft aufweist und daß die verstellbaren Strömungseinrichtungen von Verschlußgliedern (13), wie Schiebern, Klappen oder dergleichen, für die Austrittsöffnungen (12) gebildet sind.

9. Gebäude nach Anspruch 8, dadurch gekennzeichnet, daß die Verkleidung (10) eine zur Wandinnenoberfläche (3) im wesentlichen parallele Frontwand (10.2) besitzt, die oben an die Deckwand (10.1) anschließt und unterhalb der Deckwand (10.1) den Konvektionsraum (11) gegen den Gebäudeinnenraum hin abschließt.

10. Gebäude nach Anspruch 9, dadurch gekennzeichnet, daß die Frontwand (10.1) den Heizungskörper (2) zum Gebäudeinnenraum hin vollständig abdeckt, der Heizungskörper (2) sich somit insgesamt innerhalb des Konvektionsraums (11) befindet.

11. Gebäude nach Anspruch 9, dadurch gekennzeichnet, daß die Frontwand (10.2) eine den Heizungskörper (2) aufnehmende Aussparung (16) aufweist, in der der Heizungskörper (2) mit seiner dem Gebäudeinnenraum zugekehrten Wandung (17) bündig mit der Außenfläche der Frontwand (10.2) abschließt und mit seinem oberen Rand sowie seinen beiden seitlichen Rändern dicht an die zugeordneten Ränder der Aussparung (16) anschließt.

12. Gebäude nach Anspruch 10 oder 11, dadurch gekennzeichnet, daß die Frontwand (10.2) im Fußbodenbereich des Gebäudeinnenraums Öffnungen (15) für den Eintritt der Luft in den Konvektionsraum (11) aufweist.

13. Gebäude nach einem der Ansprüche 8 bis 12, dadurch gekennzeichnet, daß bei mehreren vor der Wandinnenoberfläche (3) nebeneinander angeordneten Heizungskörpern (2) sich die Deckwand (10.1) und/oder die Frontwand (10.2) der Verkleidung (10) durchlaufend über alle Heizungskörper (2) erstreckt.

14. Gebäude nach einem der Ansprüche 1 bis 13, dadurch gekennzeichnet, daß die Verkleidung (10) auf der dem Konvektionsraum (11) zugewandten Innenoberfläche eine Wärmedämmschicht (18) aufweist.

15. Gebäude nach einem der Ansprüche 1 bis 14, bei dem zwischen den Wandschalen (6,7) Pfosten bzw. Riegel (19) angeordnet sind, dadurch gekennzeichnet, daß Pfosten bzw. Riegel (19) thermisch von den Heizkörpern (2) getrennt sind.

16. Gebäude nach Anspruch 15, dadurch gekennzeichnet, daß zur thermischen Trennung zwischen den Heizkörpern (2) und den Pfosten bzw. Riegel (19) jeweils eine Isolierzwischenlage (20) vorgesehen ist.

17. Gebäude nach Anspruch 16, dadurch gekennzeichnet, daß die durch die Heizkörper (2) am Pfosten bzw. Riegel (19) gebildete Stoßfuge (21) mittels einer Leiste (22) abgedeckt ist.

18. Gebäude nach Anspruch 17, dadurch gekennzeichnet, daß die Leiste (22) über Dichtungen (23) den Heizkörpern (2) anliegt und mit den Pfosten bzw. Riegeln (19) über eine Schraube (24) verbunden ist.
